Europäisches Patentamt

European Patent Office

Office européen des brevets

(11) Publication number: **0 353 046**
**A2**

(12) **EUROPEAN PATENT APPLICATION**

(21) Application number: **89307595.2**

(22) Date of filing: **26.07.89**

(51) Int. Cl.⁵: **A 63 B 21/00**

(30) Priority: **26.07.88 GB 8817757**

(43) Date of publication of application:
**31.01.90 Bulletin 90/05**

(84) Designated Contracting States:
**AT BE CH DE ES FR GB IT LI LU NL SE**

(71) Applicant: **DAYTON INDUSTRIAL COMPANY LIMITED**
**2-12 Kwai Fat Road 11-A Kwai Chung**
**New Territories (HK)**

(72) Inventor: **Leung, Peter Shiu Hung**
**2-12 Kwai Fat Road**
**11th Floor A, Kwai Chung New Territories (HK)**

(74) Representative: **Luckhurst, Anthony Henry William et al**
**MARKS & CLERK 57-60 Lincoln's Inn Fields**
**London WC2A 3LS (GB)**

(54) Cycling monitor.

(57) In a cycle computer a microprocessor 2 receives signals from a detector, such as a pulse detector 4, over a wireless link. The microprocessor 2 is programmed to display values such as pulse rate on a liquid crystal display in response to rider instructions. Cadence and speed detectors 7, 8 are also provided and may be linked by wire 9 or may also transmit signals to the microprocessor 2 over a wireless link.

EP 0 353 046 A2

Description

# CYCLE MONITOR

The present invention relates to a cycling monitor. The invention is particularly for use with road-going bicycles, but may also have other applications, for example on exercise cycles.

Cycling monitors providing various functions such as speed and cadence measurement and pulse measurement of the rider have been suggested, but in all known devices sensors measuring the speed etc. are wired to the central processing and display unit. This is unsightly and hampers the rider.

Accordingly, a first aspect of the invention provides a cycling monitor comprising processing means including means for receiving information over a wireless, link, display means controlled by the processing means for displaying information, detecting means for detecting a function of the cycle and/or rider, the detecting means including means for transmitting a signal indicative of the value of the detected function over the wireless link to the processing means, whereby a quantity dependent on the detected function may be displayed on the display means.

A second aspect of the invention provides a cycling monitor comprising processing means, display means controlled by the processing means for displaying information, pulse detecting means for detecting the pulse of a rider, said pulse detecting means including a transmitter for transmitting a signal over a wireless link to the processing means, the processing means including a receiver for receiving the signal from the pulse detecting means, whereby the pulse of a rider may be displayed on the display means.

Preferably, cadence detecting means is provided for detecting the cadence and/or speed detecting means is provided for detecting the speed of a cycle wheel. Preferably signals from the cadence detecting means and speed detecting means are transmitted to the processing means over a wireless link. Such a feature is new. Accordingly, a third aspect of the invention provides a cycle computer comprising processing means, cadence detecting means for detecting the cadence and/or speed detecting means for detecting the speed of a cycle wheel, said cadence detecting means and/or said speed detecting means including a transmitter for transmitting a signal indicative of the cadence or speed over a wireless link to the processing means, whereby a quantity dependent on the cadence and/or cycle speed is displayed on the display means.

Other preferred features and advantages of the invention will be apparent from the following description and the accompanying claims.

The invention will be further described by way of example with reference to the accompanying drawings, in which:-

Figure 1 is a block diagram of a cycle computer in accordance with the invention;

Figure 2 shows component parts of a cycle computer in accordance with the invention; and

Figure 3 shows a modification of part of the device of Figure 2.

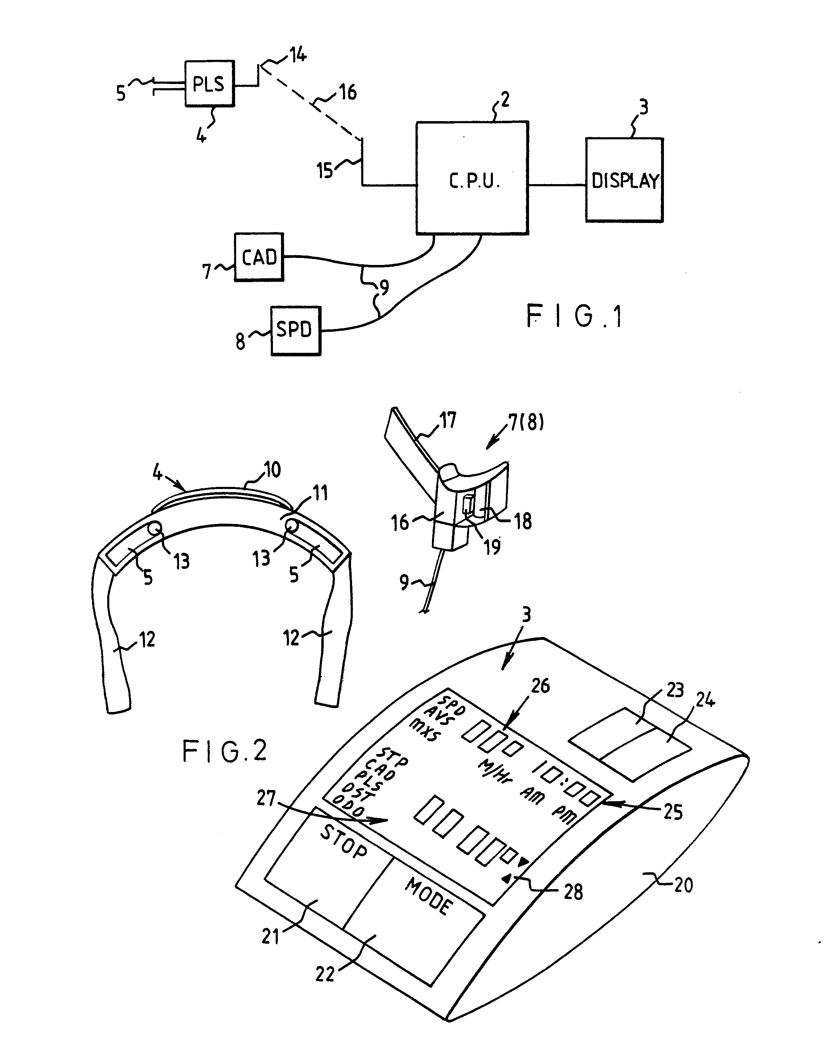

Referring to Figure 1, a cycle computer in accordance with the invention comprises processing means in the form of a microprocessor 2 and a display means in the form of liquid crystal display 3 which is driven by the microprocessor 2. Detection means is the form of a pulse detector 4 has electrodes 5 which are placed in contact with the chest of a rider. Changes in the electrical properties of the riders chest between the electrodes are detected and a signal, which is indicative of the riders pulse or heart beat, is transmitted by the detector over a wireless link 6 to the microprocessor 2. The wireless link 6 may be a radio frequency transmission or, for example, an ultrasonic transmission may be used. A cadence detector 7 and speed detector 8 are also provided. In the embodiment shown they are connected to the microprocessor by wires 9, but they, also, may transmit detected information to the microprocessor over a wireless link.

Referring to Figure 2, the pulse detector 4 is based on an E.C.G. system and comprises a housing 10 which houses a battery power supply, electronic circuitry and a radio frequency transmitter. The housing 10 is mounted on a plastic strap 11 having elastic ties 12 for tying the strap onto the chest of a wearer. Electrodes 5 are glued on the strap 11, on the opposite side to the housing 10, and electrically connected to the circuitry in the housing 10 by press-stud fasteners 13 which serve to hold the housing 10 on the strap 11. The circuitry measures changes in the potential difference of the rider's chest skin between the electrodes 5, and so the heartbeat is detected. For each heartbeat a signal is sent by the pulse detector 4 over the wireless link 6 to the C.P.U. 2. It is necessary to filter out spurious signals. Such techniques are well known in the medical field and need not be described here. It will be appreciated that another form of pulse monitor, for example acoustic or optical, could be used and the monitor could be mounted on the arm or wrist etc. of the rider. However, it is felt that the E.C.G. based system is the most effective. For each heatbeat a signal from the detector 4 is transmitted from an aerial 14 to an aerial 15 of a receiver in the microprocessor 2. The received signals are counted over a predetermined period measured against a time base, provided by a crystal oscillator, in the microprocessor. The microprocessor then calculates the pulse rate, in beats per minute, and displays this on display 28.

The cadence and speed detectors 7, 8 comprise magnetically operated reed switches encased in plastic casings 16. A casing 16 is attached to a part of the cycle frame adjacent the pedal crank or wheel respectively and a magnet (not shown) is strapped to the crank or a wheel spoke. As the magnet is rotated past the reed switch the switch closes momentarily to send a signal down wire link 9 to the microprocessor 2. Casing 16 includes a strap 17 which is fed through an aperture 18 having a tongue 19 which grips the strap 17, to strap the detector on the cycle frame.

The microprocessor 2 receives a signal each time a magnet passes the respective reed switch. For cadence measurements the number of signals received over a predetermined time period is converted into the equivalent number per minute, and this figure is displayed on the display, as for the heartbeat.

For road speed, the number of revolutions of the wheel over a predetermined period are measured and the microprocessor 2 calculates the equivalent road speed which can then be displayed. The microprocessor 2 and display 3 are housed in a housing 20 which is mountable on the cycle. Control switches 21, 22, 23 and 24 are mounted in the housing for the user to instruct the microprocessor and also a battery power supply is mounted in the housing.

The display 3 is in three parts, a clock display 25, a speed display 26, and a multifunction display 27.

The clock display 25 displays the time of day. The time is set initially by the user, by means of switches 21-24, when the battery is inserted or replaced in the housing.

The speed display 26 shows the speed of the cycle. When the battery is inserted or replaced in the housing 20, the wheel size and the speed units, i.e. mph or km/hr are fed to the microprocessor 2 via the switches 21-24. Thereafter the microprocessor 2 receives a signal for each revolution of the cycle wheel and so calculates the speed of the cycle. The microprocessor can be instructed to calculate and display the instantaneous speed, the average speed or the maximum speed, depending on the display mode. The mode is selected by pressing the mode switch 22. The maximum speed is the maximum speed achieved in that journey. The start of a journey is indicated by resetting the stopwatch (vide hereinafter) which is achieved by pressing the stop and mode switches simultaneously for two seconds. The average speed is calculated by the microprocessor 2 and is the distance travelled that journey, i.e. since the stopwatch was reset, divided by the actual cycling time. The actual cycling time is the time the wheel is turning, hence time spent with the wheel stationary, that is moving at a speed of less than say 10 revolutions per minute, is ignored by the C.P.U.

The multifunction display 27 displays a number of functions which are selected by pressing the mode switch. Firstly a stopwatch is displayed. This is set to zero by pressing the stop and mode switches 21, 22 simultaneously for two seconds. The stopwatch can be stopped by pressing the stop button 21 and restarted by repressing the stop button.

The cadence display is selected by pressing the mode switch again (the stopwatch will continue to count time). The microprocessor 2 detects signals from the cadence detector 7 and so calculates the cadence, i.e. the pedal revolutions per minute, by reference to an internal time base as is normally provided in microprocessors.

The pulse display is selected by pressing the mode button again. The pulse is calculated by counting the signals received from the pulse detector 4 over a period of time, say 10 seconds and updating the stored figure and, when necessary, the display.

The (trip) distance display is selected by pressing the mode button again. The distance is the distance travelled by the cycle since the stopwatch was reset to zero and is calculated from the wheel revolutions.

The odometer is selected by pressing the mode button again. The odometer is the distance travelled by the cycle since the battery was inserted or replaced and is calculated from the wheel revolutions.

There are five modes. The time, display 25, is always displayed. The instant speed is displayed when the stopwatch, cadence and pulse are selected, that is the first to third modes. The average speed and distance are shown in the fourth mode, and the maximum speed and odometer are shown in the fifth mode.

The microprocessor 2 is also programmed to provide alarm functions. By using switches 23 and 24 in the appropriate mode, upper and lower limits can be set for the pulse, cadence and average speed. That an upper and/or lower limit has been set is indicated by arrows 28 at a corner of the display 3. If the upper or lower limit is exceeded during a selected mode, an audible alarm sounds. To set the upper and lower limits, key 24 is pressed for two seconds when the unit is in the appropriate mode, and then the limits are set by depressing key 23..

The microprocessor 2 also includes a memory store for the riders pulse measurements and these can be recalled.

The pulse measurement recall functions as follows:

Whilst the cycle computer is in the pulse display mode key 23 is pressed for 2 seconds to enter a sub-mode - the sampling time interval selection mode. A sampling time interval is then selected by pressing key 24 (the period selected being displayed on display 27). In the present embodiment two possible time intervals are provided, 15 or 30 seconds. The "stop" key 21 is then pressed to begin sampling. The pulse is counted for each period (15 or 30 seconds) and the count at the end of the period is stored together with the time period length, i.e. 15 or 30 seconds. The data are stored in RAM in the C.P.U. 2. The ram provided in the embodiment shown is able to accept up to 677 sets of data, which is enough for a total sampling period of over 5 hours at the 30 second sampling period.

To recall the pulse counts, key 23 is pressed to stop pulse counting and enter the recall mode. The first pair of data are displayed. The C.P.U. 2 is arranged to cycle automatically through the data, displaying each pair in turn at a rate of 2 seconds each. The "stop" key 21 can be used to stop and start the recall cycling, whilst key 24 is pressed to alter the display rate. Predetermined rates of 2 second, 1 second and 0.5 second are provided in the embodiment shown. After the complete stored record has been read key 23 is pressed again to exit and return to the pulse counting mode.

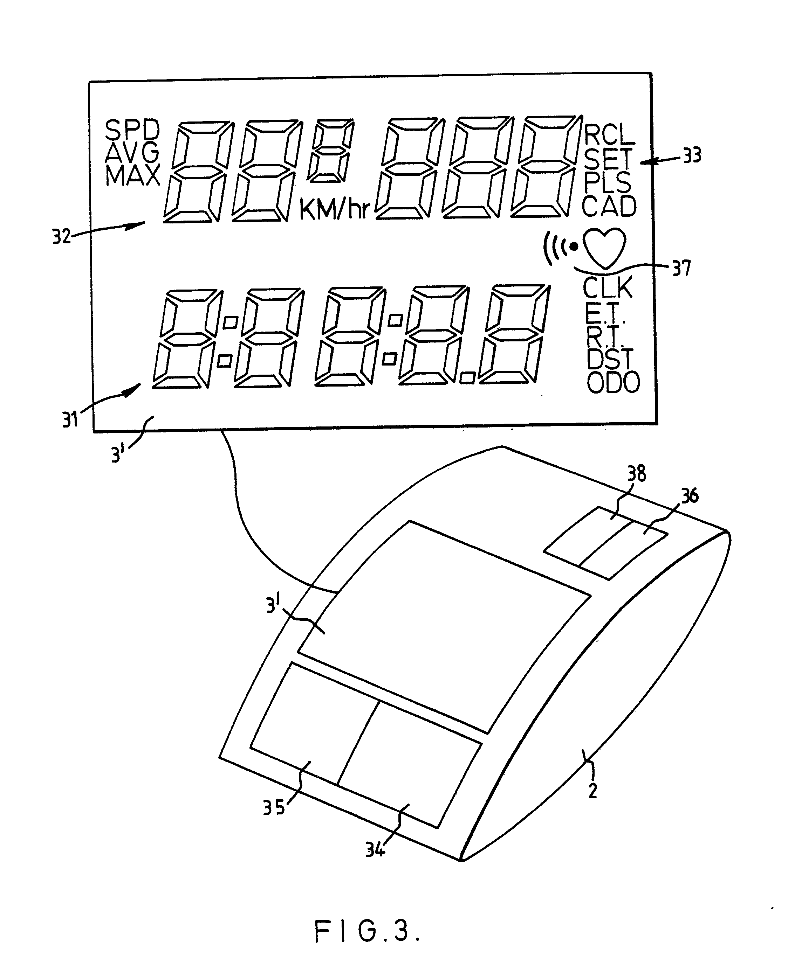

Figure 3 shows a modification of the microprocessor 2 and display 3' in the housing 20.

The display 3' is divided into three areas, 31, 32, 33 which are largely controlled by respective mode switches 34, 35, 36.

Mode key 34 controls the lower display 31. Repeated pressing of key 34 causes the microprocessor 2 to cycle between the following modes, that is types of information displayed:

CLK Clock, i.e. current time on a 12 hour clock)

E.T. Elapsed Time

R.T. Riding Time

DST Distance (i.e. distance of trip)

ODO Odometer (i.e. total distance)

The Odometer is selected by holding down key A for 2 seconds when the display 31 is in the distance mode.

Mode key 35 controls the upper display 32. Repeated pressing of key 35 causes the microprocessor 2 to cycle between the following modes, that is types of information displayed:

SPD Instantaneous speed

AVG Average speed. This operates only when E.T. is on and the wheel is turning faster than 3 m.p.h.

MAX Stores maximum speed until reset.

Key 35 is depressed for 2 seconds to reset the maximum speed.

The Mode Key 36 controls the upper display 33. Repeated pressing of the key 36 when "E.T." is on causes the microprocessor 2 to cycle between the following modes, that is types of information displayed:

PLS Current pulse rate

CAD Cadence

When "E.T." is off, the key C cycles between

PLS Current pulse rate

CAD Cadence

RCL PLS Recall pulse

SET PLS Displays users upper and lower pulse limits (default setting 220 and 40)

Key 36 is depressed for 2 seconds in the PLS mode, with "E.T." on to enable the heart rate beeper 37.

The start key 38 turns "E.T." on and off in all modes except PLS and RCL PLS. In the setting modes the key increments the digits.

In order to indicate when "E.T." is "on" the distance units M/hr or Km/hr flash.

Functions are reset as follows:-

AVG, MAX, E.T., R.T., DST and RCL PLS are reset by pressing keys 34 and 35 in any mode for over 2 seconds, except in the RCL PLS and SET PLS modes.

MAX is reset by pressing key 35 in the MAX mode. To convert from M/Hr to Km/Hr: in the DST mode, key 34 is pressed for 2 seconds and then the start key is pressed.

SET PLS displays current users upper pulse limit and lower pulse limit. Default is 220 and 40. (SET PLS not displayed when ET is ON).

RCL PLS records up to 9:59:59 of pulse data in memory when E.T. is ON. (RCL PLS will not display when E.T. is ON). RCL PLS displays users time - equal to total (E.T.) above, below and between the pre-set limits.

In RCL PLS mode the display 33 continually cycles from HI to LO to IN. Depress start key to stop or re-start continuous cycle.

| HI      165 | ABOVE | LO      120 | BELOW | IN          | BETWEEN |
| | UPPER | | LOWER | | LIMITS |
| 1:20   '35 | LIMIT | 1:12   '21 | | 2:40   '15 | |

The device is initially set up as follows:-

SETTING FUNCTIONS

A) Install Batteries
    1) LCD check - all function lighted
    2) Auto advance to SPD - PLS - CLK MODE
B) Set Clock
    1) Advance Mode A to CLK
    2) Depress Mode A and START keys for 2 sec. Display clears - Hrs. digit flashes
    3) Press start key to advance (0-12) (hold for fast advance)
    4) Fix hrs. with Mode A key. Minutes begins flashing
    5) Press Start Key to advance minutes (0-60) (hold for fast advance)
    6) Fix minutes with Mode A key and return to operating mode

C) Set Wheel Diameter
1) Advance to DST Mode
2) Press Mode A Key and Start Key for 2 sec. M/hr begins to flash
3) Use Start key to advance to Km/hr or M/hr.
4) Fix setting with Mode A key
5) Wheel diameter setting begins to flash
6) (DEFAULT VALUE IS 2492 FOR A 700 X 23C WHEEL.) Advance flashing digit with Start Key. Fix setting with Mode A and move to next digit
7) Repeat step 6 for all digits
8) Fix setting with Mode A key and return to DST mode.

D) Set Pulse Mode
1) Turn E.T. OFF with Start key
2) Advance to set PLS mode using Mode C key
3) Default values displayed
4) Press start key to begin upper (220) limit flashing
5) Press start key (hold for fast advance) to change upper limit setting
6) Fix limit with Mode C key
7) Repeat steps 5 and 6 for lower limit
8) Press Mode C to advance to PLS mode.

Various modifications may be made to the described embodiments. For a lower cost device the pulse detector may be omitted.

In particularly preferred device the cadence and speed detectors use wireless transmission and may be provided with local battery power supplies and a radio frequency transmitter.

For use with an exercise cycle the wheel speed detector may be mounted on a appropriate rotating pulley etc. of the cycle, the central processing unit calculating speed on the basis of a typical roadwheel size.

## Claims

1. A cycling monitor comprising processing means including means for receiving information over a wireless link, display means controlled by the processing means for displaying information, detecting means for detecting at least one function of the cycle and/or rider, the detecting means including means for transmitting a signal indicative of the value of the detected function or functions over the wireless link to the processing means, whereby a quantity or quantities dependent on the detected function or functions may be displayed on the display means.

2. A cycling monitor as claimed in claim 1, wherein the detecting means detects the heartbeat of a rider.

3. A cycling monitor as claimed in claim 2, wherein the detecting means transmits a signal to the processing means for each heartbeat.

4. A cycling monitor as claimed in claim 2 or 3, wherein the wireless link is a radio frequency transmission.

5. A cycling monitor as claimed in claim 2, 3 or 4, wherein the processing means includes means for calculating the pulse rate of the rider and displaying the calculated rate on the display means.

6. A cycling monitor as claimed in claim 5, wherein the processing means includes means for determining when the pulse rate goes above or goes below a predetermined value and alarm means for providing an alarm signal when the predetermined value is exceeded.

7. A cycling monitor as claimed in claim 5 or 6, wherein the processing means includes store means for storing values of the pulse rate at predetermined intervals, and recall means for recalling the stored values and displaying them on the display means.

8. A cycling monitor as claimed in claim 7, wherein the recall means recalls and displays the stored values at a predetermined rate.

9. A cycling monitor as claimed in claim 8, wherein the predetermined rate is variable.

10. A cycling monitor as claimed in claim 9, wherein the predetermined rate can be selected by the user from one of a plurality of predetermined rates.

11. A cycling monitor as claimed in any one of claims 1 to 10, wherein the processing means includes mode selection means for selecting items to be displayed on the display by the processing means.

12. A cycling monitor as claimed in claim 11 wherein the processing means includes time means for displaying the time of day in each mode.

13. A cycling monitor as claimed in claim 11 or 12, wherein the processing means includes stopwatch means providing a stopwatch operable by the user.

14. A cycling monitor as claimed in claim 11, 12 or 13 wherein the display includes a first area for displaying the time of day, a second area for displaying a value indicative of the speed of the cycle and a third area indicative of other cycle functions.

15. A cycling monitor as claimed in claim 14, wherein the processing means includes means for calculating and displaying on the display the actual speed of the cycle, the maximum speed of the cycle or the average speed of the cycle in the second display area.

16. A cycling monitor as claimed in claim 14 or 15, wherein the processing means includes means for displaying cadence, pulse, distance travelled, total distance travelled and stopwatch times in the third display area.

17. A cycling monitor as claimed in any one of claims 1 to 10, wherein the display means includes a first area for displaying speed, a second area for displaying time or distance and a third area for displaying pulse or cadence.

F I G .1

F I G .2

F I G.3.